# EUROPEAN PATENT APPLICATION

(11) **EP 4 057 604 A1**
(43) Date of publication of application: **14.09.2022**
(21) Application number: 22161213.8
(22) Date of filing: 09.03.2022
(51) Int. Cl.: H04M 9/00

(54) **MULTIPLE DWELLING HOUSE INTERPHONE SYSTEM**

(30) Priority: 11.03.2021 JP 2021039574
(71) Applicant: Aiphone Co., Ltd., Nagoya-shi, Aichi 460-0004 (JP)
(72) Inventor: SHIMOMURA, Yuta, Nagoya-shi, 456-8666 (JP); HATTORI, Masashi, Nagoya-shi, 456-8666 (JP); UNO, Ryoji, Nagoya-shi, 456-8666 (JP); FUJISHIMA, Kimiaki, Nagoya-shi, 456-8666 (JP)
(74) Representative: Prüfer & Partner mbB Patentanwälte · Rechtsanwälte

(57) **Abstract**

OBJECT

To provide a multiple dwelling house interphone system with a dwelling room master device that is equipped with the function to automatically unlock the entrance door when a visitor for a specific facility performs a calling operation from the collective entrance machine.

SOLUSION

A multiple dwelling house interphone system includes a collective entrance machine 1 and a plurality of dwelling room master devices 2. The collective entrance machine 1 is for a visitor to call and speak to a dweller. The plurality of dwelling room master devices 2 are for the dweller to respond to the call from the collective entrance machine 1. The dwelling room master devices 2 each include an unlock button 24a to unlock an entrance door 9 through which the visitor enters the dwelling area from an entrance. Some of the dwelling room master devices 2 have an automatic unlock mode that unlocks the entrance door 9 without waiting for an operation of the unlock button 24a when a call signal is transmitted from the collective entrance machine 1.

## Description

### TECHNICAL FIELD

The invention relates to a multiple dwelling house interphone system, especially relates to a multiple dwelling house interphone system applied to a case where a facility, such as a hospital, used by many persons who are not dwellers, is located inside a multiple dwelling house.

### BACKGROUND ART

In a multiple dwelling house in which an automatic door is installed at an entrance, a visitor can enter a dwelling area and go to a visit destination by asking a dweller at the visit destination to unlock the automatic door from a collective entrance machine using the multiple dwelling house interphone system.

Meanwhile, there has been a multiple dwelling house in which a dwelling area is divided into a plurality of areas, and an automatic door is installed for each area in addition to an entrance of the multiple dwelling house as a security measure. Thus, when a plurality of automatic doors are installed, collective entrance machines are installed together, and the dweller is asked to unlock the automatic door each time (see, for example, Patent Document 1).

### PRIOR ART LITERATURE

### PATENT DOCUMENTS

Patent document 1: JP 2007-13671 A

### SUMMARY OF INVENTION

### PROBLEMS TO BE SOLVED BY THE INVENTION

In a recent multiple dwelling house, a facility, such as a hospital, to which many persons who are not dwellers of the multiple dwelling house visit is located in some cases. In the facility, users from outside operate a collective entrance machine to ask for the entrance door to be opened, and calls are frequently made during operating hours of the hospital. Therefore, those who are involved in responding to the calls through a dwelling room master device bear a heavy burden.

However, unlike an ordinary dwelling unit, it is desirable that a person who is a patient can smoothly come in and out of a facility like a hospital. Therefore, when an area setting is made so as not to permit visitors to enter facilities other than the hospital as well as the dwelling units, a control that automatically performs unlocking without an unlocking operation from a dwelling room master device may be performed for visitors to the facility such as a hospital when a calling operation is performed from the collective entrance machine. Accordingly, a burden on hospital officials responding to the call can be reduced.

Therefore, in consideration of the problem, it is an object of the disclosure to provide a multiple dwelling house interphone system that includes a dwelling room master device with a function that automatically unlocks an entrance door when a visitor to a specific facility performs a calling operation from the collective entrance machine.

### SOLUTIONS TO THE PROBLEM

In order to solve the above-described problem, the invention according to claim 1 is a multiple dwelling house interphone system including a collective entrance machine and a plurality of dwelling room master devices. The collective entrance machine is for the visitor to call and speak with a dweller. The plurality of dwelling room master devices are for the dweller to respond to the call from the collective entrance machine. The dwelling room master devices each include an unlock button to unlock an entrance door through which the visitor enters a dwelling area from an entrance. Some of the dwelling room master devices have an automatic unlock mode that unlocks the entrance door without waiting for an operation of the unlock button when a call signal is transmitted from the collective entrance machine.

With the configuration, since some of the dwelling room master devices unlock the entrance door without waiting for the operation of the unlock button when the call signal is transmitted, they provide convenience as the dwelling room master devices of the facilities such as a hospital that are located inside the multiple dwelling house and used by many external persons who are not the dwellers of the multiple dwelling house. Then, by setting the dwelling room master devices for general dwelling units in a configuration where they cannot be set to the automatic unlock mode, security can be maintained.

In the invention according to claim 2, which is in the configuration according to claim 1, the dwelling room master device having the automatic unlock mode includes a time slot setting section for setting a time slot in which a transition to the automatic unlock mode is performed, and the transition to the automatic unlock mode is performed in the set time slot.

With the configuration, since the time slot in which the transition to the automatic unlock mode is performed can be set, the transition to the automatic unlock mode is automatically performed in the set time slot. Therefore, the need for performing the operation each time is eliminated, thus providing excellent convenience.

In the invention according to claim 3, which is in the configuration according to claim 2, the time slot setting section includes a weekly setting section for setting the time slot in which the transition to the automatic unlock mode is performed for every day of the week.

With the configuration, since the time slots of respective days of the week can be collectively set even when the time slot in which the transition to the automatic unlock mode is intended differs for each day of the week, the need for making the setting at each time is eliminated, thus providing excellent convenience.

In the invention according to claim 4, which is in the configuration according to any of the first to the third claims, the dwelling room master device having the automatic unlock mode includes a mode display section that displays the current mode state.

With the configuration, since it is displayed that the automatic unlock mode is in operation, the current mode state can be easily understood.

In the invention according to claim 5, which is in the configuration according to any of the first to the fourth claims, the dwelling room master device having the automatic unlock mode is a mobile terminal carried by the dweller to communicate with the collective entrance machine via an external general-purpose network, and the mobile terminal is configured to perform a response operation to the call from the collective entrance machine. An interface unit that enables communication between the collective entrance machine and the mobile terminal is disposed between the collective entrance machine and the general-purpose network. The mobile terminal set to the automatic unlock mode transmits an unlock operation signal to the entrance door via the general-purpose network to unlock the entrance door in response to the call from the collective entrance machine.

With the configuration, the dwelling room master device having the automatic unlock mode is a portable mobile terminal. Therefore, even when the automatic unlock mode is released and the response needs to be made, the response can be made from any location, thus providing excellent convenience. Then, it is not necessary to install the dwelling room master device in the room.

### EFFECTS OF THE INVENTION

According to the invention, since some of the dwelling room master devices unlock the entrance door without waiting for the operation of the unlock button when a call signal is transmitted, they are convenient as the dwelling room master devices of the facilities, such as a hospital, that are located inside the multiple dwelling house and used by many external persons who are not the dwellers of the multiple dwelling house. Then, with the setting in which the dwelling room master devices for general dwelling units cannot be configured to be set to the automatic unlock mode, the security can be maintained.

### BRIEF DESCRIPTION OF THE DRAWINGS

Fig. 1 is a block diagram illustrating an exemplary interphone system according to the disclosure.
Fig. 2 is a function block diagram of a specialized master device.
Fig. 3 is a block diagram illustrating another configuration of the interphone system.

### EMBODIMENTS

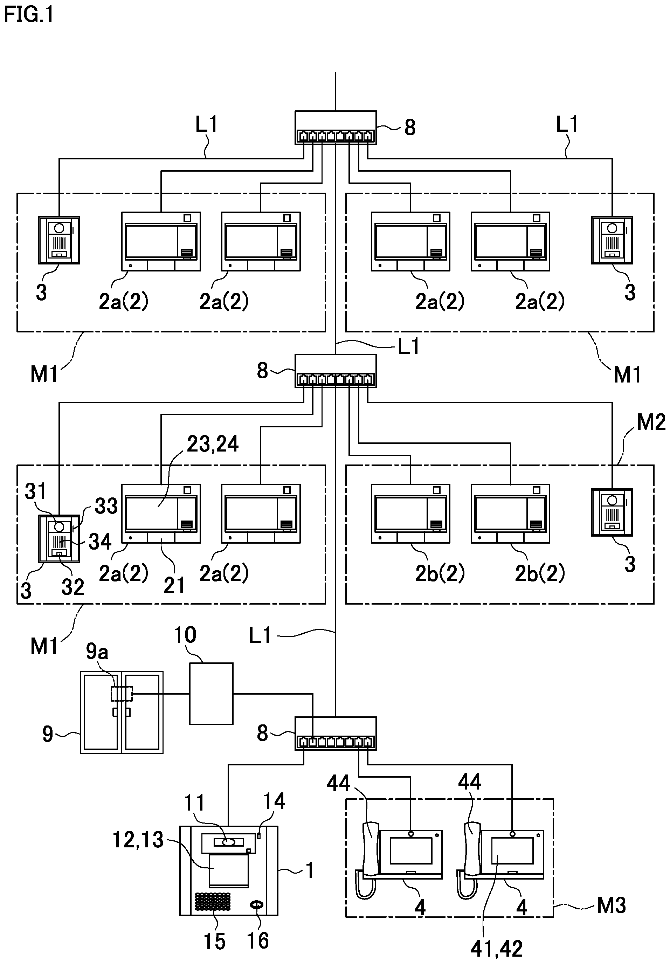

The following describes actualization in which the invention is embodied in detail with reference to the drawings. Fig. 1 is a block diagram illustrating an exemplary multiple dwelling house interphone system according to the invention. The multiple dwelling house interphone system includes a collective entrance machine 1, dwelling room master devices 2, entrance slave devices 3, management master devices 4, and the like. The collective entrance machine 1 is installed at an entrance of a multiple dwelling house and used by a visitor for calling a dweller. The dwelling room master devices 2 are installed in individual dwelling units and used for responding to the calls from the collective entrance machine 1. The entrance slave devices 3 are installed at entrances of the individual dwelling units and used for calling the dwellers. The management master devices 4 are installed in a manager room and used for speaking with the dwellers and the like.

Reference character 9 is an entrance door installed between the entrance and a dwelling area, reference character 9a is an electric lock, and reference character 10 is a door control section that locks and unlocks the entrance door 9.

While at least one dwelling room master device 2 or at least one management master device 4 is installed in the individual dwelling unit or the manager room, a configuration in which the numbers of the installed devices are both two is indicated here. Reference character 8 denotes a HUB, and the devices are mutually connected by a LAN via communication lines L1. The communication between the devices is performed by an Internet Protocol (IP). Reference character M1 is a dwelling unit, reference character M2 is a facility (here, a hospital) inside a multiple dwelling house, and reference character M3 is a manager room, all of which are located in the dwelling area.

The collective entrance machine 1 includes a camera 11, an operation section 12, a display section 13, a microphone 14 and a speaker 15, a call button 16, and the like. The camera 11 obtains an image of a visitor. The operation section 12 is used for selecting or inputting a dwelling unit to be called. The display section 13 displays a calling destination and the like. The microphone 14 and the speaker 15 are used for speaking. The entrance slave device 3 includes a slave device camera 31, a call button 32, a microphone 33, and a speaker 34.

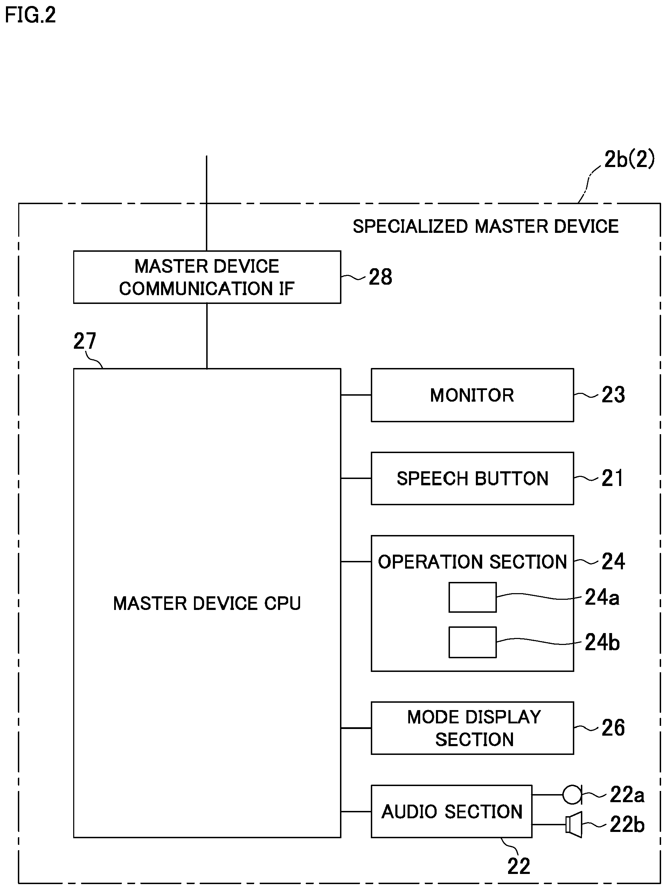

The dwelling room master device 2 includes two types of a general-purpose master device 2a and a specialized master device 2b. Here, the dwelling room master device 2 installed in the hospital M2 is the specialized master device 2b, and the dwelling room master devices 2 installed in the other dwelling units M1 are the general-purpose master devices 2a. Fig. 2 is a function block diagram of the specialized master device 2b.

As illustrated in Fig. 2, the specialized master device 2b includes a speech button 21, an audio section 22, a monitor 23, an operation section 24, a mode display section 26, a master device CPU 27, a master device communication IF 28, and the like. The speech button 21 is for responding to the calls. The audio section 22 includes a microphone 22a and a speaker 22b used for speaking. The monitor 23 displays a video image obtained by the camera 11 (or slave device camera 31). The operation section 24 performs various operations. The mode display section 26 displays whether the state is in a normal mode or an automatic unlock mode described later. The master device CPU 27 controls the specialized master device 2b. The master device communication IF 28 communicates with other devices.

Then, the operation section 24 includes an unlock button 24a and an automatic unlock setting button 24b. The unlock button 24a performs an unlock operation of the entrance door 9 when the call is received in the normal mode. The automatic unlock setting button 24b sets the automatic unlock mode in which an unlock signal to unlock the entrance door 9 is automatically output when the call is received.

The automatic unlock setting button 24b is displayed when an automatic unlock setting section is displayed (not illustrated) by a predetermined operation of the operation section 24. The automatic unlock setting section includes a time slot setting section for setting a time slot in which a transition to the automatic unlock mode is performed. When the time slot is set by the time slot setting section, the transition to the automatic unlock mode is automatically performed in the set time slot.

The general-purpose master device 2a has the common configuration except that the automatic unlock setting section and the mode display section 26 are not disposed.

Operations of the multiple dwelling house interphone system configured as described above are as follows. Note that, an operation in which a call to a dweller is performed by operating the collective entrance machine 1 and the dwelling room master device 2 of the dwelling unit as the calling destination emits a call sound, an operation in which a speech path is formed when a response operation is performed by the dwelling room master device 2 in response to the call, an operation in which a video image taken by the camera 11 is transmitted in accordance with the call and displayed on the monitor 23 of the dwelling room master device 2, and the like are similar to those in the conventional system. Therefore, their explanations are omitted.

Here, an operation when the specialized master device 2b is set to the automatic unlock mode will be mainly described.

The specialized master device 2b is transitioned to the automatic unlock mode by an ON operation of the automatic unlock setting button 24b, or during the time slot set by the time slot setting section. When the transition to the automatic unlock mode is performed, the mode display section 26 is lighted, and it is displayed that the operating state has been transitioned to the automatic unlock mode.

A description will be given of a case where a call is made from the collective entrance machine 1 to the hospital M2 including the specialized master device 2b that has transitioned to the automatic unlock mode as described above.

When the collective entrance machine 1 is operated, the hospital M2 is selected and called, and the call signal and the video image taken by the camera 11 are transmitted to the specialized master device 2b set to the automatic unlock mode, the master device CPU 27 transmits the unlock signal to the door control section 10. While the video image taken by the camera 11 transmitted together with the call signal is displayed on the monitor 23, the call sound is not emitted.

The door control section 10 thus receiving the unlock signal performs an unlock control of the electric lock 9a of the entrance door 9. The unlock signal transmitted from the specialized master device 2b is also transmitted to the collective entrance machine 1, and the collective entrance machine 1 receiving the unlock signal notifies the visitor of the unlocking by announcing that, for example, "the door is open."

The specialized master device 2b receiving the call signal is in an incoming call state, and a speech path is formed with the collective entrance machine 1 by operating the speech button 21, thereby allowing the speaking.

As described above, since some of the dwelling room master devices 2 unlocks the entrance door 9 without waiting for the operation of the unlock button 24a when the call signal is transmitted, they are convenient as the dwelling room master devices 2 of the facilities, such as a hospital, that is located inside the multiple dwelling house and used by many external persons who are not the dwellers of the multiple dwelling house. Then, by setting the dwelling room master devices 2 for general dwelling units in a configuration that cannot be set to the automatic unlock mode, the security can be maintained.

Since the mode display section 26 displays that the automatic unlock mode is in operation, the current mode state can be easily understood.

Further, since the time slot in which the transition to the automatic unlock mode is performed can be set, the automatic transition is performed in the set time slot. Therefore, the need for making a setting at each time is eliminated, thus providing excellent convenience.

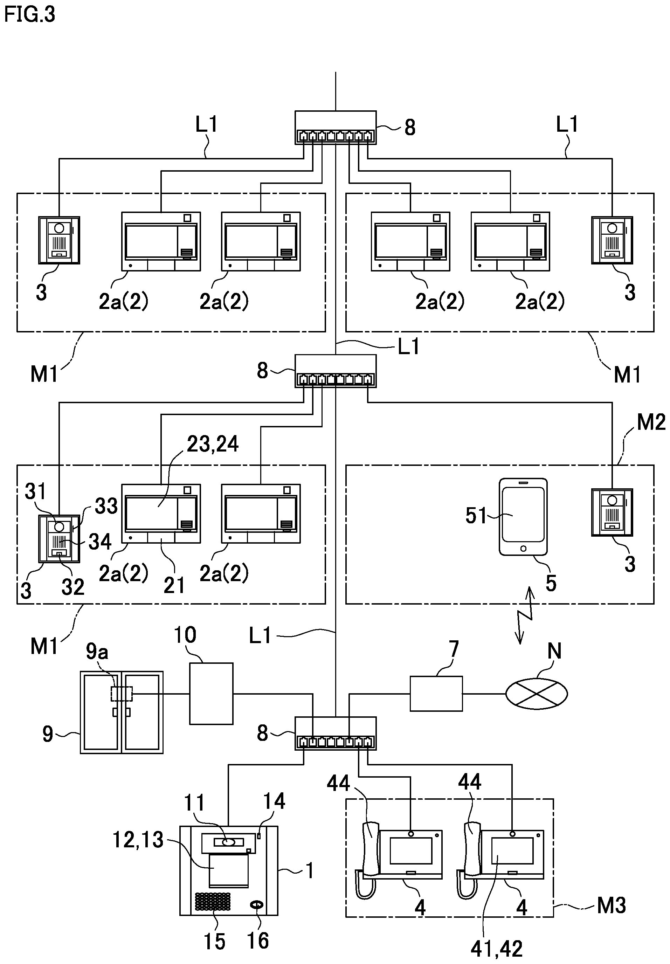

Fig. 3 is a block diagram illustrating another configuration of the multiple dwelling house interphone system, and the following describes the other configuration with reference to Fig. 3. The other configuration is different from the above-described configuration in that the specialized master device 2b is not fixedly installed in the room but is a mobile terminal 5 carried by the dweller or the like.

Since the collective entrance machine 1, the general-purpose master device 2a, the entrance slave device 3, the management master device 4, and the like are similar to those in the above-described configuration, the explanations are omitted, and differences are mainly described below.

The mobile terminal 5 is configured to have a function as the specialized master device 2b with predetermined application software (hereinafter simply referred to as an "application") installed in the mobile terminal 5. For example, a smartphone can be used, and while communication with the collective entrance machine 1 may be performed using a telephone number, it may also be performed using a VoIP technology by an application without using a telephone number.

When the application not using a telephone number is used, a communication management server (not illustrated) that manages the application and controls the communication using the application is disposed on a general-purpose network N.

Then, the collective entrance machine 1 is connected to the general-purpose network N via a Gateway (GW) adapter 7, and communicates with the mobile terminal 5. The entrance slave device 3 also communicates with the mobile terminal 5 via the GW adapter 7 and the general-purpose network N.

Operations of the system in which the specialized master device 2b is mobile as described above are as follows. In the mobile terminal 5 in which the application has been installed, an automatic unlock setting button (not illustrated) is displayed on a display section 51 by turning on the application, and the transition to the automatic unlock mode is performed by tapping.

When the collective entrance machine 1 is operated in the state, and the dwelling unit using the mobile terminal 5 as the dwelling room master device 2 is called, a call signal is transmitted from the collective entrance machine 1 to the mobile terminal 5 via the GW adapter 7 and the general-purpose network N.

The mobile terminal 5 that has received the call signal outputs an unlock operation signal to unlock the entrance door 9 to the door control section 10 without performing the calling operation. The mobile terminal 5 that has received the call signal becomes an incoming call state, a speech path is formed with the collective entrance machine 1 by a predetermined response operation, and then, the speaking is allowed.

The output unlock operation signal is transmitted to the door control section 10 via the general-purpose network N and the GW adapter 7, and the door control section 10 unlocks the electric lock 9a of the entrance door 9.

A time slot setting section is included similarly to the specialized master device 2b, and the time slot setting section is displayed on the display section 51 by a predetermined operation, thus allowing setting the time slot in which the transition to the automatic unlock mode is performed.

As described above, since the specialized master device 2b having the automatic unlock mode is the portable mobile terminal 5, the response can be made while on the go, thus eliminating the need for installing the specialized master device 2b in the room. Then, since the entrance door is automatically unlocked without the unlock operation in response to the call, the need for performing the unlock operation every time when the call is made is eliminated.

Even when the automatic unlock mode is released and the response needs to be made, the response can be made at any location, thus providing excellent convenience. Then, it is not necessary to install the dwelling room master device 2 in the room.

When the mobile terminal 5 is not set to the automatic unlock mode, similarly to the case of the general-purpose master device 2a, the calling operation is performed in response to the call signal, and the speech path is formed with the collective entrance machine 1 when the response operation is performed.

While the mobile terminal 5 is used as the specialized master device 2b, the general-purpose master device 2a also may be a mobile type, not a fixed type.

Further, while the multiple dwelling house interphone system has a configuration in which the communication between the devices is performed by the IP communication in the above-described embodiment, the technique of the invention is applicable to a conventional configuration in which a controller to control the communication between the devices is disposed and the devices are mutually connected by a two-wire transmission line or the like.

In setting the time slot in which the automatic transition to the automatic unlock mode is performed, a weekly setting section may be disposed to allow setting the time slot differently for each day of the week. Even when the time slot in which the transition to the automatic unlock mode is intended differs for each day of the week, by collectively setting the time slots of respective days of the week, the need for making the setting at each time is eliminated, thus further improving the convenience.

### DESCRIPTION OF REFERENCE SIGNS

- 1: collective entrance machine
- 2: dwelling room master device
- 2a: general-purpose master device
- 2b: specialized master device (with automatic unlock mode)
- 3: entrance slave device
- 4: management master device
- 5: mobile terminal
- 7: GW adapter (for interface)
- 9: entrance door
- 9a: electric lock
- 10: door control section
- 11: camera
- 21: speech button
- 23: monitor
- 24: operation section
- 24a: unlock button
- 24b: automatic unlock setting button
- 26: mode display section
- 27: master device CPU
- 31: slave device camera

## Claims

1. A multiple dwelling house interphone system comprising:
a collective entrance machine for a visitor to call and speak to a dweller; and
a plurality of dwelling room master devices for responding to the call from the collective entrance machine by the dweller, wherein
the dwelling room master devices each include an unlock button to unlock an entrance door through which the visitor enters a dwelling area from an entrance, wherein
some of the dwelling room master devices each have an automatic unlock mode that unlocks the entrance door without waiting for an operation of the unlock button when a call signal is transmitted from the collective entrance machine.

2. The multiple dwelling house interphone system according to claim 1, wherein
the dwelling room master device having the automatic unlock mode includes a time slot setting section for setting a time slot in which a transition to the automatic unlock mode is performed, and the transition to the automatic unlock mode is performed in the set time slot.

3. The multiple dwelling house interphone system according to claim 2, wherein
the time slot setting section includes a weekly setting section for setting the time slot in which the transition to the automatic unlock mode is performed for every day of the week.

4. The multiple dwelling house interphone system according to any one of claims 1 to 3, wherein
the dwelling room master device having the automatic unlock mode includes a mode display section that displays a current mode state.

5. The multiple dwelling house interphone system according to any one of claims 1 to 4, wherein
the dwelling room master device having the automatic unlock mode is a mobile terminal carried by the dweller to communicate with the collective entrance machine via an external general-purpose network, and the mobile terminal is configured to perform a response operation to a call from the collective entrance machine,
an interface unit that enables communication between the collective entrance machine and the mobile terminal is disposed between the collective entrance machine and the general-purpose network, and
the mobile terminal set to the automatic unlock mode transmits an unlock operation signal to the entrance door via the general-purpose network to unlock the entrance door in response to the call from the collective entrance machine.
